# EUROPEAN PATENT APPLICATION

(11) **EP 4 199 135 A1**
(43) Date of publication of application: **21.06.2023**
(21) Application number: 21855121.6
(22) Date of filing: 15.04.2021
(51) Int. Cl.: H01M 4/02, H01M 10/0525

(54) **NEGATIVE ELECTRODE PLATE AND SECONDARY BATTERY**

(30) Priority: 13.08.2020 CN 202010811820
(71) Applicant: BYD Company Limited, Shenzhen, Guangdong 518118 (CN)
(72) Inventor: CHEN, Kaixiang, Shenzhen, Guangdong 518118 (CN); XIE, Xiaodi, Shenzhen, Guangdong 518118 (CN); ZENG, Biao, Shenzhen, Guangdong 518118 (CN); YAN, Haipeng, Shenzhen, Guangdong 518118 (CN)
(74) Representative: DehnsGermany Partnerschaft von Patentanwälten
(86) International application number: PCT/CN2021/087568
(87) International publication number: WO 2022/033065

(57) **Abstract**

A negative electrode plate (100) is provided, which includes a current collector (10), and a first negative electrode active material layer (11) and a second negative electrode active material layer (12) sequentially arranged on the current collector (10). A tortuosity of the first negative electrode active material layer (12) and a tortuosity of the second negative electrode active material layer (11) satisfy: 1<t₁≤5,1<t₂≤5, and 0.5≤t₂-t₁≤3.2; where t₁ represents the tortuosity of the first negative electrode active material layer (11), t₂ represents the tortuosity of the second negative electrode active material layer (12), and t₂-t₁ represents a difference between the tortuosity of the second negative electrode active material layer (12) and the tortuosity of the first negative electrode active material layer (11).

## Description

### CROSS-REFERENCE TO RELATED APPLICATIONS

This application claims priority to and benefits of Chinese Patent Application No. 202010811820.4, entitled "NEGATIVE ELECTRODE PLATE AND SECONDARY BATTERY" and filed on August 13, 2020 by BYD COMPANY LIMITED. The entire content of the abovereferenced application is incorporated herein by reference.

### FIELD

The present disclosure relates to the battery field, and more specifically, to a negative electrode plate and a secondary battery.

### BACKGROUND

As economy and technology advance, industries such as portable electronic devices (mobile phones, tablets, laptops), drones, and electric vehicles, have an urgent need for energy storage components with a higher energy density and a higher power density. Currently, in lithium-ion batteries based on negative electrodes such as graphite, the negative electrode active material layer is a single coating layer. The single negative electrode active material layer after rolling has non-uniform tortuosity, with a small tortuosity at the surface layer away from a current collector. As such when the battery is charged and discharged at a high rate, the lithium ions in the negative electrode active material layer away from the current collector have a relatively low rate of liquid phase diffusion, which makes it difficult for the battery to exhibit a high capacity and resulting in rapid cycle attenuation, moreover, lithium plating is prone to occur on the surface of the negative electrode plate, which greatly affects the cycle performance and has potential safety hazards.

### SUMMARY

The present disclosure aims to resolve at least one of the technical problems existing in the related art. In view of this, the present disclosure provides a negative electrode plate, which can improve the capacity retention rate of a battery, thereby avoiding lithium plating from occurring in the battery.

A negative electrode plate is provided, which includes a current collector, and a first negative electrode active material layer and a second negative electrode active material layer sequentially arranged on the current collector. A tortuosity of the first negative electrode active material layer and a tortuosity of the second negative electrode active material layer satisfy: 1<t₁≤5, 1<t₂≤5, and 0.5<t₂-t₁≤3.2, where t₁ represents the tortuosity of the first negative electrode active material layer, t₂ represents the tortuosity of the second negative electrode active material layer, and t₂-t₁ represents a difference between the tortuosity of the second negative electrode active material layer and the tortuosity of the first negative electrode active material layer.

Therefore, by controlling the tortuosity of the upper negative electrode active material layer and the tortuosity of lower negative electrode active material layer to satisfy the foregoing conditions, in the case of the same surface density and compacted density, the second active coating layer with the high tortuosity can provide more hole structures, which is conducive for electrolyte infiltration during a process of battery cycle, this improves the lithium intercalation capacity, thereby preventing lithium plating from occurring on the surface of the negative electrode plate. In addition, the first active coating layer with the small tortuosity has a relatively compact structure, which is beneficial to maintain the solid phase transport efficiency of lithium ions during the process of battery cycle. The appropriate tortuosity difference between the two layers allows the battery to have a high capacity retention rate when being cycled at a high rate, with no lithium plating phenomenon occurring.

A secondary battery is provided, which includes the foregoing negative electrode plate. The secondary battery can maintain a high capacity when being cycled at a high rate, thereby having high cycle stability.

Other aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the description of the embodiments made with reference to the following accompanying drawings.
FIG. 1 is a schematic structural diagram of a negative electrode plate according to an embodiment of the present disclosure; and
FIG. 2 is normal temperature cycle curves of the batteries prepared by using the negative electrode plates of the embodiments of the present disclosure and the negative electrode plates of the comparison examples.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining the present disclosure, and should not be construed as a limitation on the present disclosure.

In the description of the present disclosure, it should be understood that orientation or position relationships indicated by the terms such as "center", "upper", "under", "front", "behind", "left", "right", "vertical", "horizontal", "top", "bottom", "inside", and "outside" are based on orientation or position relationships shown in the accompanying drawings, and are used only for ease and brevity of illustration and description, rather than indicating or implying that the mentioned apparatus or component needs to have a particular orientation or needs to be constructed and operated in a particular orientation. Therefore, such terms should not be construed as limiting of the present disclosure.

In addition, terms "first" and "second" are used merely for the purpose of description, and shall not be construed as indicating or implying relative importance or implying a quantity of indicated technical features. Therefore, a feature limited by "first" or "second" may explicitly or implicitly include one or more of the features. In the description of the present disclosure, unless otherwise stated, "a plurality of" means two or more than two.

The following describes the embodiments of the present disclosure with reference to the accompanying drawings.

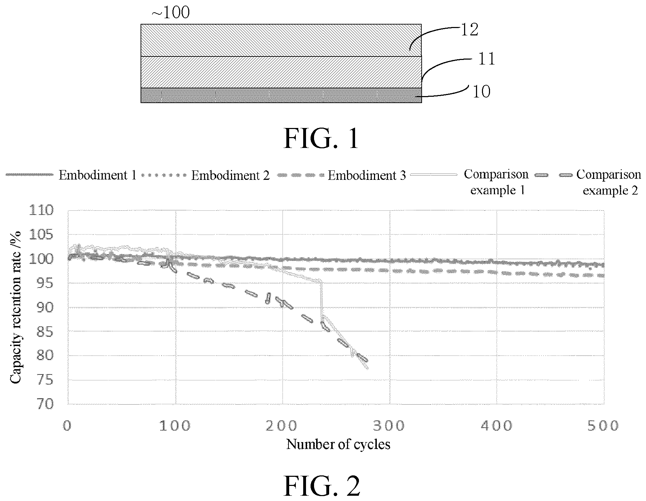

Referring to FIG. 1, a negative electrode plate 100 according to an embodiment of the present disclosure includes a current collector 10, and a first negative electrode active material layer 11 and a second negative electrode active material layer 12 sequentially arranged on the current collector. A tortuosity of the first negative electrode active material layer 11 and a tortuosity of the second negative electrode active material layer 12 satisfy: 1<t₁≤5, 1<t₂≤5, and 0.5<t₂-t₁≤3; where t₁ represents the tortuosity of the first negative electrode active material layer 11, t₂ represents the tortuosity of the second negative electrode active material layer 12, and t₂-t₁ represents a difference between the tortuosity of the second negative electrode active material layer 12 and the tortuosity of the first negative electrode active material layer 11.

In the present disclosure, the tortuosity represents a ratio of a transport path of lithium ions in a negative electrode active material layer to a layer thickness. In the negative electrode plate, the tortuosity t₂ of the second negative electrode active material layer 12 away from the current collector 10 is greater than the tortuosity t₁ of the first negative electrode active material layer 11 adjacent to the current collector. In the case of the same surface density and compacted density, the second negative electrode active material layer 12 with the high tortuosity can provide more hole structures, which is conducive for electrolyte infiltration during a process of battery cycle, this helps liquid phase transport of lithium ions, which improves the lithium insertion capacity, thereby preventing lithium plating from occurring in the interface between the negative electrode plate and the electrolyte. In addition, the first active coating layer 11 with the small tortuosity has a relatively compact structure, which is beneficial to maintain the solid phase transport of lithium ions during the process of battery cycle. All in all, a battery prepared by using the negative electrode plate with the two negative electrode active material layers is allowed to have more uniform lithium insertion at the negative electrode plate when being charged, so that the battery can have a relatively high capacity and energy density, and have a high capacity retention rate during the cycle, with low capacity fading.

Generally, the larger the tortuosity, the looser the coating layer, which is convenient for lithium-ion transport. However, an excessive tortuosity causes a sharp decrease in an electronic conductivity and an increase in a battery impedance. In an embodiment of the present disclosure, the tortuosity t₂ of the second negative electrode active material layer 12 and the tortuosity t₁ of the first negative electrode active material layer 11 are controlled to be within a range of (1, 5], so that the two negative electrode active material layers can have better ionic conductivity and electrical conductivity. In addition, in the case of the same surface density and compacted density, if t₁ and t₂ satisfy the condition of 0.5<t₂-t₁≤3.2, the battery has a relatively high capacity retention rate when being cycled at a high rate, thereby having good cycle stability. If t₂-t₁>3.2, the lithium ions mainly react in the second negative electrode active material layer, resulting in loss of the overall capacity of the battery. If t₂-t₁<0.5, t₂ and t₁ are generally small due to the requirement for the surface density and compacted density of the negative electrode plate, so that the second negative electrode active material layer is difficult to be infiltrated, which leads to a difficulty in the liquid phase diffusion of lithium ions in the negative electrode plate, as such lithium plating is prone to occur, and the cycle curve of the battery at a high rate shows a sudden drop. Therefore, only in the case that t₂-t₁ is controlled within an appropriate range, the battery can have a high capacity retention rate when being cycled at a high rate, and there is no lithium plating.

In an embodiment of the present disclosure, 0.5<t₂-t₁≤3. In another embodiment of the present disclosure, 1≤t₂-t₁≤3.

Generally, the larger the D50 of an active material, the larger the tortuosity of the negative electrode active material layer. In an embodiment of the present disclosure, the first negative electrode active material layer 11 includes a first negative electrode active material, and the second negative electrode active material layer 12 includes a second negative electrode active material. In addition, a D50 of the second negative electrode active material is greater than a D50 of the first negative electrode active material. The D50 of the first negative electrode active material and the D50 of the second negative electrode active material are both in a range of 8 µm to 20 µm. That is, the D50 of the negative electrode active material in the second negative electrode active material layer 12 away from the current collector 10 (or "adjacent to the electrolyte") is set to be large, and the D50 of the negative electrode active material in the first negative electrode active material layer 11 adjacent to the current collector 10 (or "away from the electrolyte") is set to be small. In this way, the second negative electrode active material layer 12 adjacent to the electrolyte is more fully infiltrated by the electrolyte during the process of battery cycle, which improves the lithium insertion capacity of the battery, thereby preventing the occurrence of lithium plating,thereby allows the battery to have high cycle stability, and also ensures that the two negative electrode active material layers have consistent lithium extraction/insertion rate.

The D50 of the first negative electrode active material is 8 µm to 13 µm, and the D50 of the second negative electrode active material is 13 µm to 20 µm. The difference between the D50 of the second negative electrode active material and the D50 of the first negative electrode active material is 3 µm or more, which better ensures that the tortuosity difference between the second negative electrode active material layer and the first negative electrode active material layer is within an appropriate range, thereby being more conducive to the consistency of the lithium extraction/insertion rate of the two negative electrode active material layers. For example, the D50 of the second negative electrode active material and the D50 of the first negative electrode active material may be 13 µm and 8 µm, or 15 µm and 13 µm, or 17 µm and 13 µm, respectively.

In other embodiments of the present disclosure, the tortuosity of the first negative electrode active coating layer and the tortuosity of the second negative electrode active coating layer may be changed by means of laser etching, pore forming agent, rolling several times, or the like.

In the present disclosure, the first negative electrode active material layer 11 and the second negative electrode active material layer 12 each further includes a conductive agent and a binder. That is, the first negative electrode active material layer 11 includes the first negative electrode active material, the conductive agent, and the binder; and the second negative electrode active material layer 12 includes the second negative electrode active material, the conductive agent, and the binder. The content of the conductive agent, the binder and the negative electrode active material is not limited. A mass of the first negative electrode active material accounts for 90% to 98% of a mass of the first negative electrode active material layer 11, and a mass of the second negative electrode active material accounts for 90% to 98% of a mass of the second negative electrode active material layer 12. In this way, the negative electrode plate 100 is allowed to have a relatively high negative electrode active material load, thereby improving the energy density of the battery.

A thickness of the first negative electrode active material layer 11 and a thickness of the second negative electrode active material layer 12 are both in a range of 30 µm to 100 µm. If the thickness of each negative electrode active material layer is greater than 100 µm, the energy density of the battery is increased while the power density is decreased; and if the thickness of each negative electrode active material layer is less than 30 µm, the power density of the battery is increased while the energy density is decreased. The thickness of the first negative electrode active material layer 11 and the thickness of the second negative electrode active material layer 12 are both in a range of 40 µm to 75 µm. The thickness of the first negative electrode active material layer 11 may be equal to or different from the thickness of the second negative electrode active material layer 12. A sum of the thickness of the first negative electrode active material layer 11 and the thickness of the second negative electrode active material layer 12 is in a range of 80 µm to 150 µm.

Generally, the larger the porosity of the active material layer, the larger the tortuosity of the active material layer. However, if the porosity of the active material layer is greater than 40%, there is a great reduction in the energy density of the battery. The porosity of the first negative electrode active material layer 11 is 20% to 30%, and the porosity of the second negative electrode active material layer 12 is 30% to 40%. In addition, the porosity of the second negative electrode active material layer is greater than the porosity of the first negative electrode active material layer. For example, the porosity of the first negative electrode active material layer 11 and the porosity of the second negative electrode active material layer 12 may be 20% and 30%, or 25% and 36%, or 30% and 40%, respectively.

The surface density of the first negative electrode active material layer 11 and the surface density of the second negative electrode active material layer 12 are both in a range of 0.3 g/dm² to 0.8 g/dm².

The compacted density of the negative electrode plate 100 is 1.45 g/cm³ to 1.70 g/cm³.

In the present disclosure, the current collector 10 may be a material suitable for use as the current collector of the negative electrode plate, which includes but is not limited to a metal foil, an alloy foil, and a composite foil of a metal and a polymer, such as copper, nickel, stainless steel, and the like. Preferably, the current collector 10 is a copper foil. The current collector 10 may undergo etching processing or coarsening processing, to form a secondary structure, which is conducive to form a close and effective contact with the first negative electrode active material layer 11.

The first negative electrode active material and the second negative electrode active material are independently selected from one or more of graphite, soft carbon, hard carbon, lithium titanate, a silicon-based material, and a tin-based material. That is, the first negative electrode active material and the second negative electrode active material may be the same or different in terms of material. The silicon-based material may include elemental silicon, silicon alloy, silicon oxide, a silicon-carbon composite material, and the like. The tin-based material may include elemental tin, tin oxide, tin-based alloy, and the like.

In the present disclosure, the binder and the conductive agent in each of the first negative electrode active material layer 11 and the second negative electrode active material layer 12 are not specifically limited, which may use conventional materials in the art. For example, the binder may include one or more of styrene-butadiene rubber (SBR), polyvinylidene fluoride (PVDF), polytetrafluoroethylene (PTFE), polyvinyl alcohol (PVA), polyacrylonitrile (PAN), polyimide (PI), polyacrylic acid (PAA), polyacrylate (such as polymethyl methacrylate, polymethyl acrylate, polyethyl acrylate, and the like), polyolefin (such as polypropylene, polyethylene, and the like), carboxymethyl cellulose (CMC), sodium alginate, and the like. For example, the conductive agent may include but is not limited to one or more of a branched-chain conductive agent, a one-dimensional chain/linear conductive agent, a two-dimensional sheet conductive agent, a three-dimensional spherical conductive agent, and the like. Specifically, the conductive agent may include one or more of polyacetylene, polythiophene, polypyrrole, polyaniline, carbon fiber, carbon nanotube, graphite, graphene, conductive carbon black, furnace black, mesophase carbon microbeads, and the like. The conductive carbon black may specifically include acetylene black, Ketjen black, Supper P, 350G carbon black, and the like. The graphite may include natural graphite (such as flake graphite, expanded graphite) and artificial graphite (such as KS-6 graphite, spherical graphite), and the like.

The negative electrode plate according to the first aspect of the present disclosure may be prepared by a known method in the art. For example, a preparation method of the negative electrode plate may include: coating a first negative electrode active material slurry and a second negative electrode active material slurry on a surface of the current collector; and after drying and pressing, sequentially forming the first negative electrode active material layer and the second negative electrode active material layer on the current collector.

The methods of coating may specifically include one or a combination of more of drop coating, brush coating, spray coating, dip coating, blade coating, spin coating. The time and temperature of coating may be set according to an actual requirement. The coating operation may be carried out in a dry room or in a protective atmosphere. The first negative electrode active material slurry may include the first negative electrode active material, the conductive agent, the binder, and a solvent; and the second negative electrode active material slurry may include the second negative electrode active material, the conductive agent, the binder, and a solvent. In an embodiment of the present disclosure, the first negative electrode active material slurry and the second negative electrode active material slurry are sequentially coated using a double-layer coating die head.

An embodiment of the present disclosure further provides a secondary battery, which includes the foregoing negative electrode plate.

The secondary battery further includes a positive electrode plate, and a separator film and an electrolyte arranged between the positive electrode plate and the negative electrode plate.

The positive electrode plate may be a positive electrode plate suitable for the secondary battery, which may specifically include but is not limited to one or a combination of more of a lithium iron phosphate positive electrode plate, a nickel cobalt manganese ternary positive electrode plate, a nickel cobalt aluminum ternary positive electrode plate, a lithium cobalt oxide positive electrode plate, and a lithium manganate positive electrode plate.

The separator film may be any separator film suitable for the secondary battery, which may specifically include but is not limited to one or more of polyethylene, polypropylene, nonwoven fabric, a polyester material, and the like, and a multilayer composite film thereof. The electrolyte includes an electrolyte salt and an organic solvent. The specific types and compositions of the electrolyte salt and the organic solvent are conventional selections in the battery field, which may be selected according to an actual requirement.

The technical solutions of the present disclosure are described below with specific embodiments.

### Embodiment 1

A negative electrode plate includes a copper foil with a thickness of 6 µm, and a first negative electrode active material layer and a second negative electrode active material layer sequentially arranged on the copper foil. A tortuosity of the first negative electrode active material layer is 3.42, and a tortuosity of the second active coating layer is 4.55. A difference between the tortuosity of the second active coating layer and the tortuosity of the first negative electrode active material layer is 1.13.

In Embodiment 1, a D50 of a negative electrode active material (specifically graphite) in the first negative electrode active material layer is 11 µm, and a D50 of a negative electrode active material (specifically graphite) in the second negative electrode active material layer is 17 µm. The first negative electrode active material layer has a thickness of 40 µm, and a surface density of 0.675 g/dm². The second negative electrode active material layer has a thickness of 42 µm, and a surface density of 0.688 g/dm².

The preparation method of the negative electrode plate includes:
(1) A negative electrode active material (specifically graphite), a conductive agent Supper P, carboxymethyl cellulose (CMC), styrene-butadiene rubber (SBR) and water are prepared into two slurries in a mass ratio of 100:2:1.6:1.8:128. In each slurry, a solid content is 45.2%, and a viscosity of the slurry is 2300 cps. AD50 of the graphite in the first negative electrode active material slurry is 11 µm, and a D50 of the graphite in the second negative electrode active material slurry is 17 µm.
(2) The first negative electrode active material slurry and the second negative electrode active material slurry are uniformly coated on a copper foil with a thickness of 6 µm in sequence by using a double-layer coating die head, and baked in an oven at 120°C for 15 minutes, and then after cooling, it is rolled at 2 MPa, to obtain a negative electrode plate. The negative electrode plate has a surface density of 1.363 g/dm², and has a compacted density of 1.60 g/cm³. A sum of the thicknesses of the two active material layers is 82 µm.

In the present disclosure, a focused ion beam-scanning electron microscope (FIB-SEM) is used to test the tortuosity of each active material layer in Embodiment 1, and the test method is as follows: FIB slicing is performed on a test sample every 50 nm thickness, and then SEM scanning is performed, these operations are repeated several times, and three-dimensional (3D) reconstruction is performed on all the scanning results, to obtain a 3D image of the plate. Then, a professional software is used for analysis, to obtain the tortuosity.

### Embodiment 2

A negative electrode plate includes a copper foil with a thickness of 6 µm, and a first negative electrode active material layer and a second negative electrode active material layer sequentially arranged on the copper foil. A tortuosity of the first negative electrode active material layer is 1.88, and a tortuosity of the second active coating layer is 4.06. A difference between the tortuosity of the second active coating layer and the tortuosity of the first negative electrode active material layer is 2.18.

In Embodiment 2, a D50 of a negative electrode active material (specifically graphite) in the first negative electrode active material layer is 8 µm, and a D50 of a negative electrode active material (specifically graphite) in the second negative electrode active material layer is 15 µm.

### Embodiment 3

A negative electrode plate includes a copper foil with a thickness of 6 µm, and a first negative electrode active material layer and a second negative electrode active material layer sequentially arranged on the copper foil. A tortuosity of the first negative electrode active material layer is 1.75, and a tortuosity of the second active coating layer is 4.92. A difference between the tortuosity of the second active coating layer and the tortuosity of the first negative electrode active material layer is 3.17.

In Embodiment 3, a D50 of a negative electrode active material (specifically graphite) in the first negative electrode active material layer is 8 µm, and a D50 of a negative electrode active material (specifically graphite) in the second negative electrode active material layer is 20 µm.

### Embodiment 4

A negative electrode plate includes a copper foil with a thickness of 6 µm, and a first negative electrode active material layer and a second negative electrode active material layer sequentially arranged on the copper foil. A tortuosity of the first negative electrode active material layer is 2.33, and a tortuosity of the second active coating layer is 3.02. A difference between the tortuosity of the second active coating layer and the tortuosity of the first negative electrode active material layer is 0.69.

In Embodiment 4, a D50 of a negative electrode active material (specifically graphite) in the first negative electrode active material layer is 9 µm, and a D50 of a negative electrode active material (specifically graphite) in the second negative electrode active material layer is 11 µm.

### Embodiment 5

A negative electrode plate includes a copper foil with a thickness of 6 µm, and a first negative electrode active material layer and a second negative electrode active material layer sequentially arranged on the copper foil. A tortuosity of the first negative electrode active material layer is 1.81, and a tortuosity of the second active coating layer is 4.62. A difference between the tortuosity of the second active coating layer and the tortuosity of the first negative electrode active material layer is 2.81.

In Embodiment 5, a D50 of a negative electrode active material (specifically graphite) in the first negative electrode active material layer is 8 µm, and a D50 of a negative electrode active material (specifically graphite) in the second negative electrode active material layer is 17 µm.

In order to highlight the beneficial effects of the embodiments of the present disclosure, the following comparison examples 1 to 4 are provided.

### Comparison example 1

A negative electrode plate includes a copper foil with a thickness of 6 µm, and a first negative electrode active material layer and a second negative electrode active material layer sequentially arranged on the copper foil. A tortuosity of the first negative electrode active material layer is 2.97, and a tortuosity of the second active coating layer is 3.11. A difference between the tortuosity of the second active coating layer and the tortuosity of the first negative electrode active material layer is 0.14.

In Comparison example 1, a D50 of a negative electrode active material (specifically graphite) in the first negative electrode active material layer is 14 µm, and a D50 of a negative electrode active material (specifically graphite) in the second negative electrode active material layer is 15 µm.

### Comparison example 2

A negative electrode plate includes a copper foil with a thickness of 6 µm, and a first negative electrode active material layer and a second negative electrode active material layer sequentially arranged on the copper foil. A tortuosity of the first negative electrode active material layer is 3.90, and a tortuosity of the second active coating layer is 2.01. A difference between the tortuosity of the second active coating layer and the tortuosity of the first negative electrode active material layer is -1.89.

In Comparison example 2, a D50 of a negative electrode active material (specifically graphite) in the first negative electrode active material layer is 14 µm, and a D50 of a negative electrode active material (specifically graphite) in the second negative electrode active material layer is 9 µm.

### Comparison example 3

A negative electrode plate includes a copper foil with a thickness of 6 µm, and a first negative electrode active material layer and a second negative electrode active material layer sequentially arranged on the copper foil. A tortuosity of the first negative electrode active material layer is 1.18, and a tortuosity of the second active coating layer is 5.22. A difference between the tortuosity of the second active coating layer and the tortuosity of the first negative electrode active material layer is 4.04.

### Comparison example 4

A negative electrode plate includes a copper foil with a thickness of 6 µm, and a negative electrode active material layer with a thickness of 82 µm arranged on the copper foil. A D50 of the graphite in the active coating layer is 15 µm. A tortuosity of the negative electrode active material layer is 3.06, and a tortuosity of the surface layer is slightly smaller.

In order to support the beneficial effects brought by the technical solutions of the embodiments of the present disclosure, the negative electrode plates in the foregoing examples are prepared into corresponding batteries using the following method: in a vacuum glove box, the positive electrode plate, the separator film and the negative electrode plate are stacked in sequence, to obtain a naked battery core; then the battery core is sleeved into a case; after baking and drying, a special electrolyte for the ternary battery is injected, welding and sealing are performed; and the battery is finally obtained through processes such as high temperature aging, formation, aging, and the like.

A direct current internal resistance (DCIR) test and a cycle performance test are performed on each battery prepared by using the negative electrode plate according to each of the foregoing embodiments and examples. The results of the DCIR test are summarized in Table 1, the results of the cycle performance test are summarized in Table 1, and the cycle curves of some examples are plotted in FIG. 2.

The DCIR test method is as follows: 1) discharging the battery at 0.2 C to a cutoff voltage of 2.5 V at normal temperature (25°C), and resting the battery for 30 minutes; charging the battery at 0.2 C to 4.2 V at normal temperature, and resting the battery for 30 minutes; discharging the battery at 0.2 C to 2.5 V at normal temperature, and calculating an initial capacity Co of the battery; and charging the battery at 0.2 C (50% Co), to adjust a state of charge (SOC) of the battery to 50% SOC; 2) resting the battery at -10°C for 12 hours, and testing the DCIR value that the battery is charged at 1 C for 30 seconds.

The cycle performance test method is as follows: 1) charge: at 25°C, charging the battery at 1 C constant current to 4.1 V, charging the battery at 0.5 C to 4.15 V, charging the battery at 0.2 C to 4.2 V, and resting the battery for 30 minutes; 2) discharge: discharging the battery at 1C constant current to 2.5 V, and resting the battery for 30 minutes; 3) a termination condition: these operations are repeated 500 times.

**Table 1 Summary of electrochemical performances of batteries prepared by using the negative electrode plate of each example**

| No. | -10°C 50% SOC charge DCIR (mΩ) | Capacity retention rate after 500 cycles at a room temperature (%) |
|---|---|---|
| Embodiment 1 | 3.128 | 98.2 |
| Embodiment 2 | 3.142 | 98.0 |
| Embodiment 3 | 3.201 | 96.9 |
| Embodiment 4 | 3.177 | 97.3 |
| Embodiment 5 | 3.160 | 97.8 |
| Comparison example 1 | 4.022 | 41.2 |
| Comparison example 2 | 4.123 | 45.3 |
| Comparison example 3 | 3.985 | 60.0 |
| Comparison example 4 | 3.878 | 48.1 |

It can be seen from Table 1 that the DCIR values of the batteries prepared by using the negative electrode plates according to the embodiments of the present disclosure are much lower than those of the comparison examples, which indicates that the batteries according to the embodiments of the present disclosures have better power performance.

As can be seen from FIG. 2 and Table 1, the capacity retention rates of the batteries prepared by using the negative electrode plates of Embodiments 1 and 2 are highest, followed by those of the batteries prepared by using the negative electrode plates of Embodiments 3 to 5, but they are much higher than those of the batteries prepared by using the negative electrode plates of the comparison examples. Since the tortuosity difference of the two active coating layers in the negative electrode of the battery according to each embodiment of the present disclosure satisfies the condition of 0.5≤t₂-t₁≤3.2, under high rate conditions, the upper second negative electrode active coating layer can provide more hole structures, which is conducive for electrolyte infiltration, thereby being advantageous to the liquid phase transport of lithium ions. In addition, the first active coating layer has more compact structures, which is beneficial to maintain the solid phase transport and the electron transport of lithium ions during the cycle. When t₂-t₁>3 (Comparison example 3), the capacity retention rate of the battery is decreased. The reason is that the lithium ions mainly react in the second negative electrode active material layer, and the lithium ions in the first negative electrode active material layer has a poor solid phase conductivity and a high impedance, resulting in loss of the overall capacity of the battery. When t₂-t₁<0.5 (Comparison Examples 1 to 2), the cycle curves of the batteries show a sudden drop, which is due to the difficulty in the liquid phase diffusion of lithium ions and thereby resulting in lithium plating.

The above results show that in the case that the negative electrode plate includes two negative electrode active material layers, and the difference between the tortuosity of the second negative electrode active material layer away from the current collector and the tortuosity of the first negative electrode active material layer adjacent to the current collector is in a range of 0.5 to 3.2, the battery prepared by using the negative electrode plate can be ensured to have a relatively low DCIR value, so as to have stable cycle performance at a high rate, thereby prolonging its service life.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A negative electrode plate, comprising a current collector, and a first negative electrode active material layer and a second negative electrode active material layer sequentially arranged on the current collector, a tortuosity of the first negative electrode active material layer and a tortuosity of the second negative electrode active material layer satisfying: 1<t₁≤5,1<t₂≤5, and 0.5≤t₂-t₁≤3.2;
wherein t₁ represents the tortuosity of the first negative electrode active material layer, t₂ represents the tortuosity of the second negative electrode active material layer, and t₂-t₁ represents a difference between the tortuosity of the second negative electrode active material layer and the tortuosity of the first negative electrode active material layer.

2. The negative electrode plate according to claim 1, wherein the first negative electrode active material layer comprises a first negative electrode active material, the second negative electrode active material layer comprises a second negative electrode active material, a D50 of the first negative electrode active material and a D50 of the second negative electrode active material are in a range of 8 µm to 20 µm, and the D50 of the second negative electrode active material is greater than the D50 of the first negative electrode active material.

3. The negative electrode plate according to claim 2, wherein the D50 of the first negative electrode active material is 8 µm to 13 µm, and the D50 of the second negative electrode active material is 13 µm to 20 µm.

4. The negative electrode plate according to claim 2 or 3, wherein a difference between the D50 of the second negative electrode active material and the D50 of the first negative electrode active material is 3 µm or more.

5. The negative electrode plate according to claim 2, wherein a porosity of the first negative electrode active material layer is 20% to 30%, a porosity of the second negative electrode active material layer is 30% to 40%, and the porosity of the second negative electrode active material layer is greater than the porosity of the first negative electrode active material layer.

6. The negative electrode plate according to any one of claims 1 to 5, wherein a thickness of the first negative electrode active material layer and a thickness of the second negative electrode active material layer are within a range of 30 µm to 100 µm.

7. The negative electrode plate according to any one of claims 1 to 6, wherein a surface density of the first negative electrode active material layer and a surface density of the second negative electrode active material layer are in a range of 0.30 g/dm² to 0.73 g/dm².

8. The positive electrode plate according to claim 5, wherein a mass of the first negative electrode active material accounts for 90% to 98% of a mass of the first negative electrode active material layer, and a mass of the second negative electrode active material accounts for 90% to 98% of a mass of the second negative electrode active material layer.

9. The positive electrode plate according to claim 2, wherein the first negative electrode active material and the second negative electrode active material are independently selected from one or more of graphite, soft carbon, hard carbon, lithium titanate, a silicon-based material, and a tin-based material.

10. A secondary battery, comprising the negative electrode plate according to any one of claims 1 to 9.
